# EUROPÄISCHE PATENTSCHRIFT

(11) **EP 2 058 689 B1**
(45) Veröffentlichungstag und Bekanntmachung des Hinweises auf die Patenterteilung: **12.10.2011**
(21) Anmeldenummer: 08015240.8
(22) Anmeldetag: 28.08.2008
(51) Int. Cl.: G02B 27/01, G02C 5/14, G02B 27/00

(54) **Anzeigevorrichtung**
Display device
Dispositif d'affichage

(30) Priorität: 08.11.2007 DE 102007053282
(43) Veröffentlichungstag der Anmeldung: 13.05.2009
(73) Patentinhaber: Carl Zeiss AG, 73447 Oberkochen (DE)
(72) Erfinder: Karutz, Frank-Oliver, Dr., 70197 Stuttgart (DE); Rottenkolber, Birgit, 85092 Kösching (DE); Beck, Klaus, 73447 Oberkochen (DE); Wurscher, Norbert, 73431 Aalen (DE); Engler, Bertold, 72213 Altenstieg (DE)
(74) Vertreter: Geyer, Fehners & Partner

(56) Entgegenhaltungen:
- EP-A1- 0 588 216
- FR-A- 1 295 891
- US-A- 5 589 846
- US-A1- 2004 160 572

## Beschreibung

Die vorliegende Erfindung betrifft eine Anzeigevorrichtung mit einem Bildmodul zum Erzeugen eines Bildes, einem brillenartigen Gestell, das das Bildmodul trägt und einen Vorderabschnitt mit einer Nasenauflage sowie zwei seitliche Ohrbügel, die am Vorderabschnitt befestigt sind, aufweist. Solche Anzeigevorrichtungen sind z.B. aus der US 2004/0160572 A1 bekannt und werden häufig HMD-Vorrichtungen (Head-Mounted-Display-Vorrichtungen) genannt. Bei diesen Vorrichtungen besteht aufgrund des Bildmoduls, das durch das brillenartige Gestell getragen wird, die Problematik, daß die Anzeigevorrichtung im Bereich der Nasenauflage ein relativ großes Gewicht aufweist. Daher kann eine solche HMD-Vorrichtung leicht von der Nase nach unten rutschen, so daß der Benutzer das Bild nicht mehr optimal erfassen kann. Insbesondere kann es auch zu Kopfschmerzen kommen, wenn die HMD-Vorrichtung zu tief auf der Nase sitzt.

Es ist möglich, ein Halteband vorzusehen, das vom freien Ende eines Ohrbügels um den Hinterkopf zum freien Ende des anderen Ohrbügels verläuft. Dabei ist problematisch, daß die Frisur des Benutzers unter Umständen im Bereich des Haltebandes eingedrückt wird. Ferner können sich Haare im Halteband verfangen. Auch darf die Länge des Haltebandes, das in der Regel ein Gummiband ist, nicht zu kurz oder zu lang sein. Auch tritt häufig die Schwierigkeit auf, daß das Halteband zu stark gespannt ist, so daß auf Dauer ein unangenehmer Druck der Anzeigevorrichtungen auf die Nase des Benutzers erfolgt.

Die EP 0 588 216 A1 zeigt eine Brille mit verschiebbaren Ohrbügeln.

Ausgehend hiervon ist es Aufgabe der Erfindung, eine Anzeigevorrichtung der eingangs genannten Art so weiterzubilden, daß ein fester und gleichzeitig beschwerdefreier Sitz der Anzeigevorrichtung beim Tragen auf dem Kopf eines Benutzers gewährleistet werden kann.

Die Aufgabe wird bei einer Anzeigevorrichtung der eingangs genannten Art durch die Merkmale des kennzeichnenden Teils des Anspruches 1 gelöst.

Durch die Verschiebbarkeit des Halteelements ist es möglich, das Halteelement für jeden Benutzer individuell optimal hinter dem Ohr im Bereich des Schläfenbeines zu positionieren.

Da sich der zweite Abschnitt vom unteren Ende des ersten Abschnitts in einer Richtung weg vom Vorderabschnitt erstreckt, kann ein großer Auflagebereich mit dem Halteelement realisiert werden. Gleichzeitig führt dies nicht zu einem erhöhten Platzbedarf der HMD-Vorrichtung, da der zweite Abschnitt bevorzugt im wesentlichen parallel zum Ohrbügel verläuft. Würde der zweite Abschnitt in gleicher Weise wie der erste Abschnitt nach unten verlaufen, würde sich das Halteelement unerwünscht weit vom Ohrbügel nach unten erstrecken.

Die Innenseite des Halteelementes, die im auf den Kopf eines Benutzers aufgesetzten Zustand der Anzeigevorrichtung hinter dem Ohr des Benutzers am Kopf anliegt, ist so ausgebildet, daß sie im Bereich des ersten Abschnitts in eine Richtung vom Ohrbügel weg (also vom Ohrbügel nach unten) zunächst eine konvexe Krümmung aufweist, die in eine konkave Krümmung übergeht. Ferner weist die Innenseite im Bereich des zweiten Abschnitts in einer Richtung vom ersten Abschnitt weg eine konvexe Krümmung auf, die in eine konkave Krümmung übergeht. Durch die beschriebene Ausbildung der Innenseite im Bereich des ersten Abschnitts kann das Halteelement optimal in die Hinterohrmulde (der Bereich des Schläfenbeins hinter dem Gehörgang) eingreifen. Durch die konvexe Krümmung im Bereich des zweiten Abschnitts führt dies zu einem regelrechten Einhaken des Halteelements in die Hinterohrmulde. Die darauf folgende konvexe Krümmung des zweiten Abschnittes ist eine Anpassung an die sich nach hinten wieder verjüngende Kopfform, wodurch eine positive Keilwirkung erreicht wird, die einer nach vorne über die Nase rutschenden Anzeigevorrichtung entgegenwirkt.

Insbesondere ist das Halteelement in Längsrichtung des Ohrbügels verschiebbar. Damit kann die Position des Halteelements für jeden Benutzer individuell so angepaßt werden, daß das Haltelement genau hinter dem Ohr im Schläfenbeinbereich bei aufgesetzter Anzeigevorrichtung anliegt.

Ferner kann die Innenseite des Halteelements im Bereich des zweiten Abschnitts in einer Richtung vom Ohrbügel weg konkav gekrümmt sein. Dies ist eine weitere anatomische Anpassung der Ausbildung der Innenseite an die Hinterohrmulde.

Die beiden Abschnitte des Halteelementes können im wesentlichen L-förmig angeordnet sein. Damit wird ein einerseits kompaktes Halteelement bereitgestellt, das andererseits einen optimalen Halt der Anzeigevorrichtung gewährleisten kann.

Insbesondere weist die Anzeigevorrichtung einen Arretiermechanismus auf, mit dem eine eingestellte Verschiebeposition des Halteelementes relativ zum Ohrbügel arretierbar ist. Natürlich sind mehrere verschiedene Verschiebepositionen möglich, so daß eine individuelle Anpassung an den jeweiligen Benutzer erfolgen kann. Die Verschiebepositionen können entweder vorgegebene Verschiebepositionen mit vorbestimmten Abständen zueinander sein oder es ist eine kontinuierliche Verschiebung möglich.

Der Arretiermechanismus kann beispielsweise mittels Form- und/oder Reibschluß erfolgen.

Ferner ist es möglich, das Halteelement teleskopartig mit dem Brillenbügel zu verbinden, um die gewünschte Verschiebbarkeit zu erreichen.

Des weiteren ist das Halteelement bevorzugt derart verschiebbar zum Ohrbügel, daß nur eine Verschiebung in Längsrichtung des Ohrbügels möglich ist. Eine Drehung um die Längsrichtung wird dadurch beispielsweise verhindert.

Das Halteelement kann einen Führungsschlitten aufweisen, der in zwei Führungsnuten, die sich in Längsrichtung an beiden Seiten des Ohrbügels erstrecken, eingreift.

Das Halteelement kann relativ dick und starr sein.

Ferner kann das Halteelement in einer Richtung quer zum Ohrbügel elastisch vorgespannt sein. Wenn das Halteelement starr ist, kann eine Federvorspannung realisiert sein. Alternativ ist es möglich, daß die elastische Vorspannung durch die Eigenelastizität des Halteelements realisiert ist.

Natürlich ist das Halteelement für das rechte Ohr an die entsprechende Anatomie des Kopfes im Bereich des rechten Ohrs und das Halteelement für das linke Ohr an die entsprechende Anatomie des Kopfes im Bereich des linken Ohrs angepaßt.

Das Bildmodul der Anzeigevorrichtung zum Erzeugen des Bildes kann das Bild als virtuelles Bild so erzeugen, daß es ein Benutzer in einem vorbestimmten Abstand vor dem Auge wahrnehmen kann, wenn er die Anzeigevorrichtung auf dem Kopf in Art einer Brille trägt.

Insbesondere kann das Bildmodul wie bei bekannten HMD-Vorrichtungen ausgebildet werden.

Ferner kann das Bildmodul eine Steuereinrichtung aufweisen, die auf der Basis von vorgegebenen Bilddaten ein bilderzeugendes Element des Bildmoduls so ansteuert, daß das gewünschte Bild erzeugt wird. Das Bildmodul kann ferner eine Abbildungsoptik zur Abbildung des mittels dem bilderzeugenden Element erzeugten Bildes enthalten.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine perspektivische Ansicht einer Ausführungsform der erfindungsgemäßen Anzeigevorrichtung;
- Fig. 2: eine schematische Draufsicht der Anzeigevorrichtung von Fig. 1;
- Fig. 3: eine Seitenansicht der Anzeigevorrichtung von Fig. 1;
- Fig. 4: eine Schnittdarstellung entlang der Schnittlinie A-A von Fig. 3;
- Fig. 5: eine Ansicht von hinten der Anzeigevorrichtung von Fig.1;
- Fig. 6: eine vergrößerte perspektivische Darstellung des Halteelementes 13;
- Fig. 7: eine Schnittdarstellung entlang der Schnittlinie B-B in Fig. 6;
- Fig. 8: eine Schnittdarstellung entlang der Schnittlinie C-C in Fig. 6;
- Fig. 9: eine Schnittdarstellung entlang der Schnittlinie D-D in Fig. 6, und

- Fig. 10: eine vergrößerte Darstellung eines Ausschnitts des Ohrbügels 4 zusammen mit dem Halteelement 13.

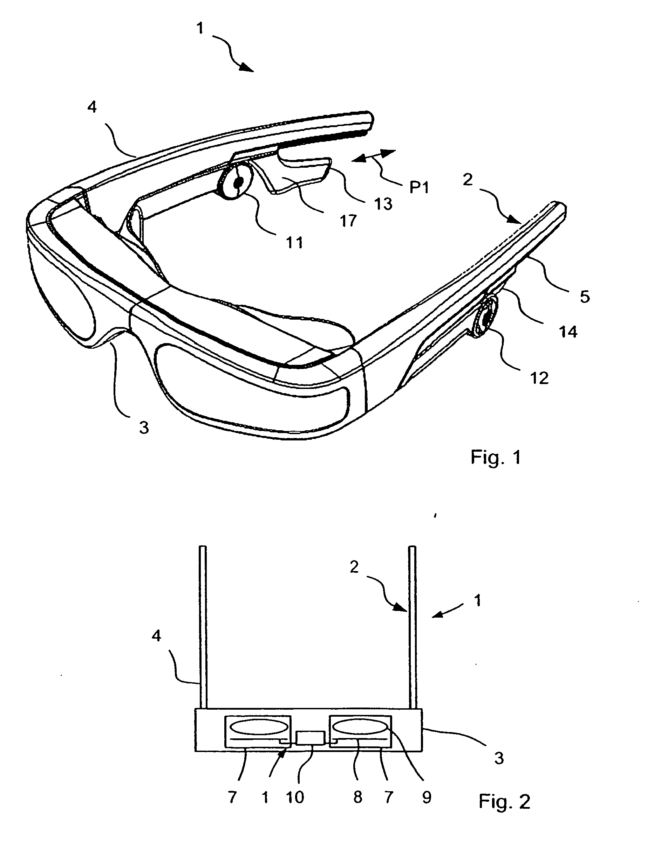

Bei der in den in den Figuren 1-10 gezeigten Ausführungsform umfaßt die erfindungsgemäße Anzeigevorrichtung 1 ein brillenartiges Gestell 2 mit einem Vorderabschnitt 3, der eine Nasenauflage 30 aufweist, und zwei Ohrbügeln 4, 5.

Im Vorderabschnitt 3 ist, wie in der schematischen Darstellung von Fig. 2 ersichtlich ist, ein Bildmodul 6 enthalten, das für jedes Auge eines Benutzers, der die Anzeigevorrichtung 1 aufsetzt, eine Anzeigeeinheit 7 mit einem bilderzeugenden Element 8 und einer Abbildungsoptik 9 aufweist. Das Bildmodul 6 enthält ferner eine Steuereinheit 10, die die Anzeigeinheiten 7 auf der Basis vorgegebener Bilddaten ansteuert, um die gewünschten Bilder zu erzeugen. Die Bilddaten können beispielsweise über eine nicht gezeigte Signalleitung, die durch den rechten Ohrbügel 4 verläuft, der Steuereinheit 10 zugefügt werden.

An jedem Ohrbügel 4, 5 ist jeweils ein Ohrhörer 11, 12 befestigt, der nach unten geschwenkt und dessen Abstand vom Vorderabschnitt 3 eingestellt werden kann.

Ferner ist an jedem Ohrbügel ein Halteelement 13, 14 verschiebbar befestigt, wie durch den Doppelpfeil P1 in Fig. 1 angedeutet ist. Die beiden Halteelemente 13 und 14 sind zueinander spiegelsymmetrisch ausgebildet, so daß nachfolgend im Detail nur das Halteelement 13 für das rechte Ohr beschrieben wird.

Das Halteelement 13 ist im wesentlichen L-förmig ausgebildet und weist einen sich vom rechten Ohrbügel 4 nach unten erstreckenden ersten Abschnitt 15 sowie einen sich daran anschließenden und vom Vorderabschnitt 3 wegerstreckenden zweiten Abschnitt 16 auf.

Die Innenseite 17 (Fig. 1) des Halteelements 13 ist so ausgebildet und geformt, daß sie an den Bereich des Schläfenbeins hinter der Ohrmuschel anliegt, wenn ein Benutzer die Anzeigevorrichtung 1 in Art einer Brille trägt. Aufgrund der Verschiebbarkeit des Halteelements 13 relativ zum Ohrbügel 4 kann man individuell für jeden Benutzer das Halteelement 13 genau hinter dem Ohr (im Bereich der sogenannten Hinterohrmulde) positionieren.

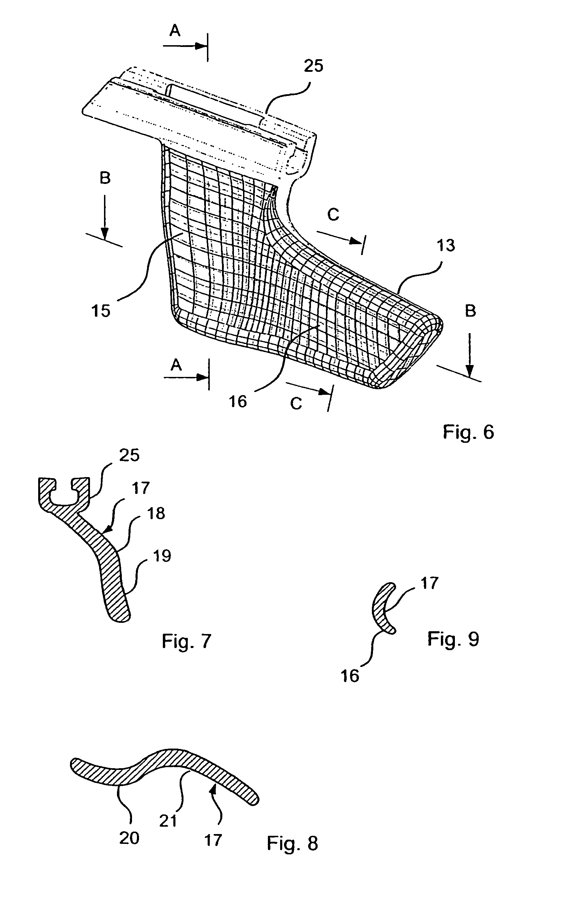

Um ein möglichst optimales Anliegen des Halteelements 13 an der Hinterohrmulde zu realisieren, weist die Innenseite 17 im Bereich des ersten Abschnittes 15 in einer Richtung vom Ohrbügel 4 nach unten zunächst einen konvex gekrümmten Bereich 18 auf, an den sich ein konkav gekrümmter Bereich 19 anschließt. Die beiden Bereiche 18 und 19 sind insbesondere in den Schnittdarstellungen 4 und 7 sowie in der perspektivischen vergrößerten Darstellung des Halteelementes 13 in Fig. 6 ersichtlich. Durch diese Ausbildung des ersten Abschnitts 15 kann das Halteelement 13 gut in die Hinterohrmulde eingreifen.

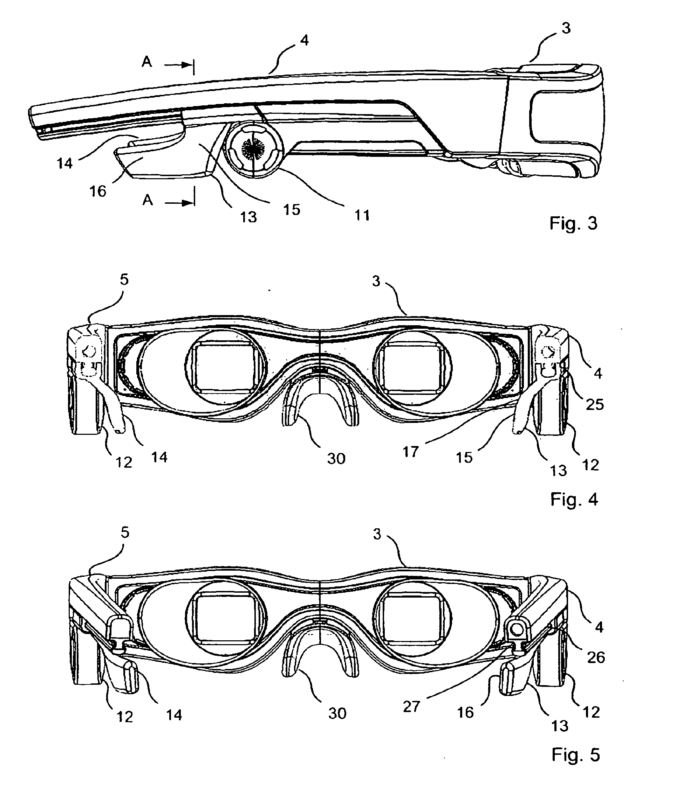

Das Halteelement 13 ist ferner so ausgebildet, daß die Innenseite 17 im Bereich des zweiten Abschnitts 16 in einer Richtung vom ersten Abschnitt 15 weg zunächst einen konvex gekrümmten Bereich 20 aufweist, dem sich ein konkav gekrümmter Bereich 21 anschließt. Der konvex gekrümmte Bereich 20 dient zum Eingreifen in die Hinterohrmulde. Durch den sich daran anschließenden konkav gekrümmten Verlauf 21 erfolgt eine Anpassung der sich nach hinten verjüngenden Kopfform. Dadurch wird mit einer positiven Keilwirkung einem Rutschen der Anzeigevorrichtung nach vorne über die Nase des Benutzers entgegengewirkt. Der konkave Verlauf 21 des zweiten Abschnitts 16 des Halteelements 13 ist auch in Fig. 5 ersichtlich.

Senkrecht zur Längsrichtung des zweiten Abschnitts 16 ist die Innenseite 17 im Bereich des zweiten Abschnitts 17 konkav gekrümmt, wie insbesondere aus der Schnittdarstellung von Fig. 9 ersichtlich ist. Diese Krümmung ist so gewählt, daß sie anatomisch an den entsprechenden Verlauf des Kopfes angepaßt ist.

Insgesamt weist das Halteelement 13 somit eine optimal anatomisch angepaßte Form auf. Damit wird ein fester, beschwerdefreier Sitz der Anzeigevorrichtung 1 erreicht, was ein Herunterrutschen der Anzeigevorrichtung über die Nase des Benutzers verhindert.

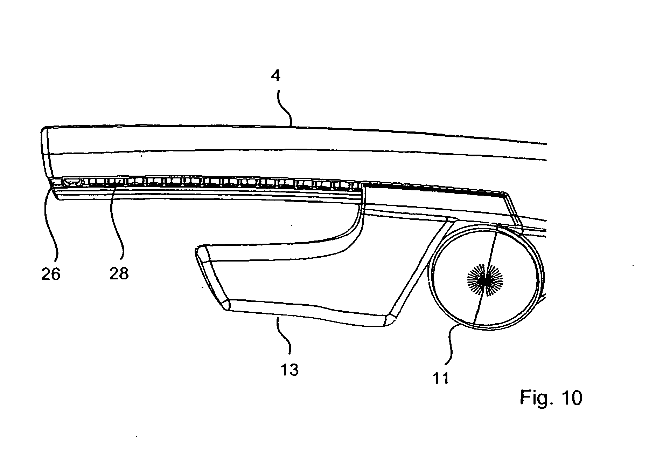

Um die Verschiebbarkeit des Halteelements 13 relativ zum Ohrbügel 4 zu gewährleisten, weist das Halteelement 13 an dem oberen Ende des ersten Abschnitts 15 eine Führung 25 auf, die in zwei Führungsnuten 26,27 (Fig. 5) auf beiden Seiten des Ohrbügels 4 eingreift. In der vergrößerten Detaildarstellung von Fig. 10 ist die sichtbare Führungsnute 26 eingezeichnet.

Für eine sichere Arretierung der gewählten Verschiebeposition des Halteelements 13 relativ zum Ohrbügel 4 ist ein Rastmechanismus vorgesehen. So kann die Führungsnute 26 mehrere voneinander in Längsrichtung des Ohrbügels 4 beabstandete Rastvertiefungen 28 aufweisen, in die ein entsprechendes Gegenstück an der Führung 25 eingreift. Dabei kann es sich beispielsweise um eine integral mit der Führung 25 ausgebildete Materialerhöhung (nicht gezeigt) handeln, die formschlüssig aber federnd in die Rastvertiefungen 28 eingreift. Es ist jedoch auch möglich, ein separates Federelement (nicht gezeigt) an der Führung 25 vorzusehen.

Natürlich ist es auch möglich, die Rastvertiefungen am Halteelement 14 auszubilden und das entsprechende eingreifende Gegenstück am Ohrbügel 4 vorzusehen.

Um das Gewicht der Anzeigevorrichtung möglichst gering zu halten, können insbesondere der Vorderabschnitt 3, die beiden Ohrbügel 4 und 5 sowie die Halteelemente 13 und 14 aus Kunststoff hergestellt sein.

Die Halteelemente 13 und 14 können entweder starr ausgebildet sein oder auch flexibel federnd, um zusätzlich zu der schon vorhandenen anatomischen Anformung ein optimales Anschmiegen der Halteelemente 13 und 14 an den Kopf des Benutzers zu gewährleisten.

Die Arretierung der Halteelemente 13, 14 relativ zum Ohrbügel 4, 5 kann neben der beschriebenen Verrastung auch durch Reibschluß erfolgen. Insbesondere ist es möglich, eine Fixierung durch eine Schraube zu erzielen, die bei der gewünschten Verschiebeposition angezogen wird.

Durch die beschriebene Ausbildung des Halteelements 13,14 als wesentlich L-förmig wird der Vorteil erreicht, daß ein außerordentlich fester, beschwerdefreier Sitz im aufgesetzten Zustand erreicht wird und gleichzeitig die Anzeigevorrichtung noch äußert kompakt ist, da der längere Teil (zweiter Abschnitt 16) parallel zum Ohrbügel 4 und vom Vorderabschnitt 3 weg verläuft.

Bei der erfindungsgemäßen Anzeigevorrichtung können die beiden Halteelemente 13 und 14 voneinander unabhängig verschoben und positioniert werden, so daß eine individuelle Anpassung für das linke und rechte Ohr des Benutzers möglich ist. In der Regel wird der Benutzer dazu geneigt sein, die beiden Halteelemente 13 und 14 an gleichen Verschiebepositionen an den beiden Ohrbügeln zu positionieren. Man wird also zum Beispiel den Abstand der Halteelemente 13 und 14 vom Vorderabschnitt 3 beziehungsweise von der Drehgelenkverbindung der Ohrbügel 4,5 mit dem Vorderabschnitt 3 gleich wählen. Um dies zu erleichtern, kann auf der Innenseite der Ohrbügel 4,5 jeweils eine Skala angebracht werden. Die Halteelemente 13 und 14 weisen eine Markierung (z.B. einen Strich oder eine entsprechende Geometrie wie beispielsweise Pfeil, Kerbe, Ecke) auf, die mit einem gewünschten Skalenstrich der Skala des jeweiligen Ohrbügels 4,5 zur Deckung gebracht werden kann. Somit kann mit dieser Skala links und rechts die gleiche oder auch bestimmte unterschiedliche Positionen für die Halteelemente 13,14 eingestellt werden.

Die Skala kann gedruckt, geprägt oder im Ohrbügel angeformt sein. Es ist auch möglich, die Rastvertiefungen 28 als Skala zu verwenden. Die Beschriftung der Skala kann insbesondere in Längenmaßangaben gemessen vom Drehgelenk zwischen dem Ohrbügel 4,5 und dem Vorderabschnitt 3 erfolgen (z. B. 60 mm, 65 mm, 70 mm,...). Die Beschriftung kann auch durch eine Numerierung der einzelnen Rastvertiefungen 28 erfolgen.

Anstatt der schienenartigen Führung 25 in Verbindung mit den Rastnuten 26 und 27 ist es möglich, die Halteelemente 13 und 14 so auszubilden, daß sie teleskopartig mit dem Ohrbügel 4, 5 verbunden sind.

## Patentansprüche

1. Anzeigevorrichtung mit
einem Bildmodul (6) zum Erzeugen eines Bildes,
einem brillenartigen Gestell (2), das das Bildmodul (6) trägt und einen Vorderabschnitt (3) mit einer Nasenauflage (30) sowie zwei seitliche Ohrbügel (4,5), die am Vorderabschnitt (3) befestigt sind, aufweist,
**dadurch gekennzeichnet, daß**
an jedem Ohrbügel (4, 5) jeweils ein Halteelement (13,14) verschiebbar befestigt ist, das jeweils einen sich vom Ohrbügel (4,5) nach unten erstreckenden ersten Abschnitt (15) sowie einen mit dem unteren Ende des ersten Abschnitts (15) verbundenen zweiten Abschnitt (16) aufweist, wobei sich der zweite Abschnitt (16) vom unteren Ende in einer Richtung weg vom Vorderabschnitt (3) erstreckt, und daß die Innenseite (17) des Halteelements (13,14), die im auf den Kopf eines Benutzers aufgesetzten Zustand der Anzeigevorrichtung hinter dem Ohr des Benutzers am Kopf anliegt, im Bereich des ersten Abschnitts in einer Richtung vom Ohrbügel (4,5) weg zunächst eine konvexe Krümmung aufweist, die in eine konkave Krümmung übergeht, sowie im Bereich des zweiten Abschnitts (16) in einer Richtung vom ersten Abschnitt (15) weg eine konvexe Krümmung aufweist, die in eine konkave Krümmung übergeht.

2. Anzeigevorrichtung nach Anspruch 1, **dadurch gekennzeichnet, daß** das Halteelement (13,14) entlang der Längsrichtung des Ohrbügels (4,5) verschiebbar ist.

3. Anzeigevorrichtung nach Anspruch 1 oder 2, **dadurch gekennzeichnet, daß** die Innenseite des Halteelements (13,14), die im auf den Kopf eines Benutztes aufgesetzten Zustand der Anzeigevorrichtung hinter dem Ohr des Benutzers am Kopf anliegt, im Bereich des zweiten Abschnitts in einer Richtung vom Ohrbügel weg eine konkave Krümmung aufweist.

4. Anzeigevorrichtung nach einem der Ansprüche 1 bis 3, **dadurch gekennzeichnet, daß** die beiden Abschnitte (15,16) des Halteelementes (13,14) im wesentlichen L-förmig angeordnet sind.

5. Anzeigevorrichtung nach einem der obigen Ansprüche, **dadurch gekennzeichnet, daß** ein Arretiermechanismus vorgesehen ist, mit dem eine eingestellte Verschiebeposition des Halteelementes (13,14) relativ zum Ohrbügel (4,5) arretierbar ist.

6. Anzeigevorrichtung nach Anspruch 5, **dadurch gekennzeichnet, daß** der Arretiermechanismus eine Arretierung mittels Form- und/oder Reibschluß bewirkt.

7. Anzeigevorrichtung nach einem der obigen Ansprüche, **dadurch gekennzeichnet, daß** das Halteelement (13,14) in einer Richtung quer zum Ohrbügel elastisch vorgespannt ist.

8. Anzeigevorrichtung nach Anspruch 7, **dadurch gekennzeichnet, daß** die elastische Vorspannung durch die Eigenelastizität des Halteelements (13,14) realisiert ist.

## Claims

1. Display apparatus, comprising
an image module (6) for generating an image,
a spectacle-like frame (2), which carries the image module (6) and comprises a front portion (3) with a nose support (30), as well as two lateral temples (4,5) mounted to the front portion (3), **characterized in that**
each of the temples (4, 5) has shiftably mounted to it a holding element (13,14), which comprises a first portion (15) extending downwards from the temple (4,5) as well as a second portion (16) connected with the lower end of the first portion (15), said second portion (16) extending from said lower end in a direction pointing away from the front portion (3), and that the internal surface (17) of the holding element (13,14), which abuts against the user's head behind the user's ear when the display apparatus is mounted on the user's head, comprises a curvature in the region of the first portion in a direction extending away from the temple (4,5), which curvature is a convex curvature at first and then passes over into a concave curvature as well as comprises a curvature in the region of the second portion (16) in a direction extending away from the first portion (15), which curvature is a convex curvature at first and then passes over into a concave curvature.

2. The display apparatus as claimed in claim 1, **characterized in that** the holding element (13,14) is shiftable along the longitudinal direction of the temple (4,5).

3. The display apparatus as claimed in claim 1 or 2, **characterized in that** the internal surface of the holding elements (13,14), which surface abuts against the user's head behind the user's ear when the display apparatus is mounted on the user's head, comprises a concave curvature in the region of the second portion in a direction extending away from the temple.

4. The display apparatus as claimed in any one of claims 1 to 3, **characterized in that** both portions (15,16) of the holding element (13,14) have a substantially L-shaped arrangement.

5. The display apparatus as claimed in any one of the above claims, **characterized in that** a locking mechanism is provided by which an adjusted displacement position of the holding element (13,14) relative to the temple (4,5) can be locked.

6. The display apparatus as claimed in claim 5, **characterized in that** the locking mechanism effects locking by form fit and/or friction locking.

7. The display apparatus as claimed in any one of the above claims, **characterized in that** the holding element (13,14) is elastically pre-tensioned in a direction transverse to the temple.

8. The display apparatus as claimed in claim 7, **characterized in that** said elastic pretensioning is achieved by the inherent elasticity of the holding element (13,14).

## Revendications

1. Dispositif d'affichage, comportant
un module vidéo (6) destiné à générer une image,
une monture (2) du type lunettes, qui porte le module vidéo (6) et comporte une partie avant (3) avec un pont (30) à mettre en appui sur le nez, ainsi que deux branches latérales (4, 5) à mettre en appui sur les oreilles, lesquelles sont fixées à la partie avant (3),
**caractérisé en ce que**
au niveau de chaque branche latérale (4, 5) est fixé de manière mobile en translation un élément de retenue (13, 14), qui comporte dans chaque cas une première partie (15) qui s'étend depuis la branche latérale (4, 5) vers le bas, ainsi qu'une deuxième partie (16) liée à l'extrémité inférieure de la première partie (15), ladite deuxième partie (16) s'étendant depuis l'extrémité inférieure dans une direction s'écartant de la partie avant (3), et **en ce que** la face intérieure (17) de l'élément de retenue (13, 14), laquelle est en appui contre la tête derrière l'oreille de l'utilisateur lorsque le dispositif d'affichage est posé sur la tête d'un utilisateur, comporte, dans la zone de la première partie, dans une direction s'écartant de la branche latérale (4, 5) d'abord une courbure convexe, qui se prolonge par une courbure concave, et comporte, dans la zone de la deuxième partie (16), dans une direction s'écartant de la première partie (15) une courbure convexe qui se prolonge par une courbure concave.

2. Dispositif d'affichage selon la revendication 1, **caractérisé en ce que** l'élément de retenue (13, 14) est mobile en translation le long de la direction longitudinale de la branche latérale (4, 5).

3. Dispositif d'affichage selon la revendication 1 ou 2, **caractérisé en ce que** la face intérieure de l'élément de retenue (13, 14), laquelle est en appui contre la tête derrière l'oreille de l'utilisateur lorsque le dispositif d'affichage est posé sur la tête d'un utilisateur, comporte, dans la zone de la deuxième partie, une courbure concave dans une direction s'écartant de la branche latérale.

4. Dispositif d'affichage selon l'une quelconque des revendications 1 à 3, **caractérisé en ce que** les deux parties (15, 16) de l'élément de retenue (13, 14) sont agencées sensiblement en forme de L.

5. Dispositif d'affichage selon l'une quelconque des revendications précédentes, **caractérisé en ce qu'**il est prévu un mécanisme d'arrêt, par lequel une position de coulissement réglée de l'élément de retenue (13, 14) peut être bloquée par rapport à la branche latérale (4, 5).

6. Dispositif d'affichage selon la revendication 5, **caractérisé en ce que** le mécanisme d'arrêt induit un blocage au moyen d'un assemblage par conjugaison de forme et/ou par force.

7. Dispositif d'affichage selon l'une quelconque des revendications précédentes, **caractérisé en ce que** l'élément de retenue (13, 14) est précontraint élastiquement dans une direction transversalement à la branche latérale.

8. Dispositif d'affichage selon la revendication 7, **caractérisé en ce que** la précontrainte élastique est réalisée par l'élasticité propre de l'élément de retenue (13, 14).
